# EUROPEAN PATENT APPLICATION

(11) **EP 4 245 907 A1**
(43) Date of publication of application: **20.09.2023**
(21) Application number: 22162907.4
(22) Date of filing: 18.03.2022
(51) Int. Cl.: D06F 39/10, D06F 33/30, D06F 34/14

(54) **FILTER ARRANGEMENT**

(71) Applicant: Electrolux Professional AB, 112 51 Stockholm (SE)
(72) Inventor: STÜCHELI, Marius, 112 51 Stockholm (SE); BLOMQVIST, Mikael, 112 51 Stockholm (SE); LORENTZON, Anna, 112 51 Stockholm (SE); RADOSAVLJEVIC, Ivan, 112 51 Stockholm (SE); MELIN, Niclas, 112 51 Stockholm (SE)
(74) Representative: AWA Sweden AB

(57) **Abstract**

A filtration unit (100) configured to remove microparticles from a water stream from at least one washing machine (WM) is provided. The filtration unit comprises an inlet (110) configured to deliver a water stream (WS) from at least one washing machine (WM), a water reservoir (120) configured to receive the water stream (WS) from the inlet (110), a separator module (130) fluidly connected to the water reservoir (120), wherein the separator module (130) is configured to separate microparticles (MP) from the water stream (WS) creating a filtered water stream (FWS), and an outlet (150) configured to allow the filtered water stream (FWS) to leave the filtration unit (100). A method for removing microparticles from a water stream is also provided.

## Description

### Technical field

The present invention relates to water filtration. In particular, the present invention relates to the technical field of filtering wastewater from washing machines.

### Background

It is to be noted that in the present application the expression "washing machine" may indicate a "simple" washing machine (i.e. a washing machine which can only wash and rinse the laundry) as well as a washing-drying machine (i.e. a washing machine which can also dry the laundry). It may also indicate a washer-extractor or a washer without extractor. The washing machine may have a horizontal, inclined, or vertical axis of rotation.

Wastewater, or discharge water, from washing machines contains particles of different origin, materials, and sizes. The particle density and properties may for example depend on factors as the detergents used and the fabric washed. Microparticles such as microplastics or microfibers, also known as microplastic fibers or plastic microfibers, are commonly found in the discharge water.

Microparticles are hard to filter out and thusly end up in our environment. Reports show that microplastic from the textile industry account for 15 - 30 percent of the plastic waste entering the oceans and our ecosystems.

There is a need in the fields of washing machines to prevent microplastics from ending up in nature. There are some available filters in the prior art. One problem with these filters is that they quickly clog up, this leads to the filters not working properly and causes malfunction.

There is a need in the field for improved ways to separate and remove microparticles from the discharge water of washing machines.

### Summary

The inventors have reached the insight that there is a need for a filter arrangement or filtration unit that at least partially improves the filtering of microparticles for the discharge water of a washing machine. In particular there is a need for a filter arrangement or filtration unit that can easily be used with existing washing machines or a plurality of washing machines for filtering the discharge water and removing microparticles from therein.

With the word microparticle is meant a small particle that is harder to stop or filter. There are no standards for defining the size of a microparticle to date. A microparticle may for example be a particle with a size smaller than for example 5 millimeters. Microparticles may for example be around 50 microns or as small as 5 microns or smaller. Microparticles may be released from clothes during a washing cycle and may for example consist of microscopic pieces of plastics or other fibers. Different types of microplastics are described in further detail below.

Microplastics come in many different shapes and from many different sources. Microplastics are fragments of any type of plastic and may for example be of sizes smaller than 5 mm in length. Primary microplastics are small plastic pieces purposefully manufactured, for example for use in cosmetics or as granules for artificial soccer grass. Primary microplastics may also be made for medical use. Secondary microplastics are small pieces of plastic that are created from the breakdown of larger debris. Studies have shown that many synthetic fibers can be released from clothing and persist in the environment. For example, polyester, polyamide, acrylic and elastane clothing may create microplastic fibers. Fibers from the clothing industry that are created or released during washing have shown to be a large source for the microplastics in the environment.

The present disclosure seeks to provide at least some embodiments of a filter arrangement or filter unit which reduces at least some of the above-mentioned drawbacks and some of the drawbacks of filter-solutions available in the prior art. More specifically, the present disclosure aims at providing at least some embodiments offering a filter unit for at least one washing machine for removing microparticles from the discharge water of the washing machine.

In a first aspect of the present disclosure, there is provided a filtration unit configured to remove microparticles from a water stream from at least one washing machine. The filtration unit comprises an inlet configured to deliver a water stream from at least one washing machine. The microplastic filtration unit further comprises a water reservoir configured to receive the water stream from the inlet. The microplastic filtration unit further comprises a separator module fluidly connected to the water reservoir. The separator module is configured to separate microparticles from the water stream creating a filtered water stream. The filtration unit further comprises an outlet configured to allow the filtered water stream to leave the filtration unit.

In a second aspect a method for removing microparticles from a water stream using a filtration unit is provided. The method comprises receiving a water stream from at least one washing machine in a first reservoir. The method further comprises moving water from the first reservoir to a separator module. The method further comprises separating microparticles from the water stream using the separator module creating a filtered water stream. The method further comprises gathering the microparticles in a suitable receptacle. The method further comprises allowing the filtered water stream to leave the filtration unit.

By the term "microparticle" may for example be meant microplastics or microfibers but in general can intend any particle that are small in size. For example, a microparticle may be a fragment of any substance smaller than 5 mm in length. However, the microparticles that the filtration unit may filter out from the water stream may both be larger than 5 mm and smaller than 5 mm. The microparticles may for example be microplastics or microfibers from clothing, microbeads, plastic pellets or nurdles.

By the term "filtered water stream" is here meant a stream of water that has been at least partially cleaned using a separator module. A filtered water stream may for example contain a lower percentage of microparticles than an unfiltered discharge water stream of a washing machine.

Thusly, there is provided a filtration unit and a method for removing microparticles from water with at least the advantage of removing microparticles from the discharge water of at least one washing machine. The present invention is further advantageous in that it can be used for already installed washing machines. By placing a filtration unit according to the first aspect in connection with one, or a set of washing machine, the discharge water may be filtered before it reaches a sewer or drain. The present invention is further advantageous in that a separate filtration unit ensures that the discharge water from washing machines in use today can be filtered without having to add new parts to the machines or to replace the machines.

According to an embodiment, the at least one washing machine is a set of two or more washing machines. In a professional environment a set of washing machines for washing fabric or laundry are often placed together with all machines discharging water into drains or sewers. The present embodiment is advantageous in that the filtration unit may receive the water from at least two washing machines in order to filter the discharge water from the washing machines. The present embodiment is advantageous in that it can be added to an already existing set of washing machines in order to provide filtration means to diminish the microparticles ending up in the environment. Compared to installing a filtration unit for each washing machine this embodiment is also more efficient and economical.

According to an embodiment, the filtration unit further comprises a coarse filter arranged upstream from the separator module for filtering the water stream. By the term "coarse" it is here meant a filter for particles larger than the microparticles. The coarse filter may for example be configured to capture lint or larger particles or pieces in the water stream in order to ensure that only the water and the microparticles enter the separator module. The coarse filter may also catch objects such as coins or rocks or any other object that may end up in the washing machine. The coarse filter may for example be placed in the vicinity of the water reservoir or the inlet in order to filter out larger debris prior to filtering the microplastic fibers. The coarse filter may be a pre-separation system. The coarse filter may be a disposable or replaceable filter bag that is attached over the inlet. The coarse filter may have a specific mesh size configured to collect the debris that could cause clogging. The coarse filter could also be a removable or re-usable or cleanable mesh bucket configured to filter the water stream. The coarse filter could also be a slope grid or sieve inside the water reservoir. The present embodiment may be advantageous in that the coarse filter ensures that the separation module is not clogged up by larger debris.

According to an embodiment, the filtration unit further comprises a connection means fluidly connecting the water reservoir and the separator module. The filtration unit further comprises a pump configured to move the water stream through the connection means from the water reservoir to the separator module. The present embodiment is advantageous in that it can be configured to take up a smaller space since it can be built in height. For example, many washing machines have a discharge at floor level and in order for the filtration unit to not take up too much space it may be advantageous to pump the water upwards through the connection means from the first reservoir. Further, the water can then pass through the separation module by gravity which also may be advantageous. The connection means may be a pipe, a hose, a half-pipe or any other suitable connection for holding and transmitting a fluid. The pump may be any type of pump, such as a centrifugal pump or displacement pump. The pump may be an effluent pump configured to pump water containing particles of a certain size. The pump may for example be an electrically powered pump. The pump may be fully or partially submerged or may be placed outside of the connection means.

According to an embodiment, the filtration unit further comprises a debris unit configured to receive the microparticles from the separator module. The separator module separates the microparticles from the water stream in order to create the filtered water stream. The microparticles may then be passed to a debris unit. The microparticles may be passed to the debris unit together with a small amount of water in a slurry. By the term slurry is here meant a mixture of water and microparticles. The percentage of water may vary depending on the separator module. Other terms that may be used for a slurry include mixture, sludge, residue, sediment.

According to an embodiment, the debris unit comprises a dewatering means for removing excess water from the microparticles. The present embodiment is advantageous in that a user is less likely to pour a more solid debris into a sewer or drain. By dewatering the microparticles the filtration unit ensures that the microplastics are taken care of in a correct manner ensuring that less microparticles end up in the environment.

According to an embodiment, the dewatering means comprises at least one of an evaporator, a pressing means and a disposable filter. In case the dewatering means comprises an evaporator, the excess water may be evaporated which ensures that the microparticles are easily discarded by a user. The evaporator may be any kind of evaporator. The evaporator may for example be a heat pump, a microwave, a mist generator, an immersion heater, an induction heater or any other kind of evaporator. The evaporated water may be directed out of the debris unit or collected to be discarded at a later point. In case the water is pressed out of the microparticles or filtered out of the microparticles a user can easily discard the microparticles correctly while allowing the excess water to be led into a drain or sewer.

According to an embodiment, the debris unit further comprises a debris receptacle configured to receive the dewatered microplastics. The present embodiment is advantageous in that a user may not have to open the debris unit in order to discard the microparticles. In other embodiments the debris unit may comprise a disposable filter that needs to be changed by opening the debris unit. In certain embodiments the debris unit may be only a filter and the debris unit may be interchangeable or cleanable.

According to an embodiment, the filtration unit further comprises a motor configured to drive at least one component of the filtration unit. The component may for example be the pump, the separator module and the debris unit. The present embodiment may be advantageous in that a motor can provide mechanical action to parts of the separator module, debris unit or pump that in certain embodiments may be preferable. The motor may be any type of motor such as an electrical motor. The motor may for example drive a rotating part of a separator module in order to clean a filter of the separator module. The motor may also be configured to allow pressing of the microparticles within the debris unit in order to dewater the microparticles. Further description of the motor and possible embodiments using a motor will be described with relation to the figures.

According to an embodiment, the separator module comprises a microparticle filter arranged for filtrating microparticles from the water stream. The present embodiment may be advantageous in that a filter allowing water to pass through it and simultaneously hindering microplastic fibers may be effective in removing microparticles from a water stream. The microparticle filter may be any type of filtering means, such as a barrier filter, hydrocyclone or centrifuge. The microplastic filter may for example be a disposable, or cleanable barrier filter with a mesh size small enough to separate microparticles.

According to an embodiment, the microparticle filter comprises a rotating part configured to clean the microparticle filter in order to prevent clogging. The rotating part may be configured to engage a side of the microparticle filter where the microparticles are stopped by the filter. In time a filter may get clogged hindering the function of the filter. The present embodiment is advantageous in that the rotating part may scrape the microparticles from the filter allowing the microparticles to be guided away and to leave the separator module or be placed at a suitable location within the separator module. The microparticle filter may be cleaned in different ways. Another solution may include flushing the filter with water in order to ensure proper function of the filter. The filter may also be cleaned by backwashing.

According to an embodiment, the microparticle filter comprises a centrifuge configured to remove microparticles from the water stream. The present embodiment is advantageous in that a centrifuge may be an efficient way of filtering a water stream in order to remove microparticles.

According to an embodiment, the water stream flows through the separator module by gravity. The present embodiment is advantageous in that no pumping may be required for the water stream to pass through the separator module. Similarly, the microplastics and the possible excess water may flow through the debris unit only by gravity. Depending on the structure of the filtration unit no power may be needed, and the filtration unit may be fully passive.

According to an embodiment, the filtration unit further comprises a control unit configured to control at least the operation of one component of the filtration unit. The control unit may for example control the operation of the separation module, the debris unit, the pump or any other component of the filtration unit. The control unit may receive data from the different components in order to control the operation of, and adjust the flow of water through, the filtration unit.

According to an embodiment, the control unit may be connected to the at least one washing machine as well as the filtration unit. The present embodiment is advantageous for example in that the washing machines may inform the control unit that a washing cycle has ended, and that discharge water will be discharged from the washing machines. Further, the control unit may be connected to a display unit of the washing machines allowing a user to get information regarding the status of the filtration unit.

According to an embodiment, the filtration unit further comprises an overflow drain in connection with the first tank. The overflow drain allows the water stream to leave the filtration unit in order to prevent an uncontrollable overflow or blockage. The present embodiment is advantageous in that in case the separator module cannot accept more water, the water reservoir may have an overflow drain in order to let water flow out of the filtration unit in order not to damage any other components. Further, it is advantageous since the overflow drain allows for a controlled overflow and not an uncontrollable overflow. It is also conceivable that the separator module has an overflow drain. In case the filtration unit comprises an intermediate water reservoir the intermediate water reservoir may also comprise an overflow drain. In certain embodiments no overflow drains may be present. In case the separator module, intermediate tank or any other part of the filtration unit is full the water can instead be dammed up back to the washing machines hindering any water to escape unfiltered and hindering a too high flow to damage any component of the filtration unit.

According to an embodiment, the filtration unit further comprises a sensor configured to measure a water level in at least one of the water reservoir and the separator module. The debris unit may also have a sensor. An intermediate water reservoir may also comprise a sensor. The debris unit may also comprise a sensor. The sensor may be configured to measure a water level in any component and to share the water level with the control unit. In case the water level exceeds a predetermined threshold, the control unit may stop the water flow until enough water has passed through the system. In case the water level exceeds a predetermined threshold in the water reservoir, the control unit may start the water flow to start the filtration. The sensors may also be configured to measure any other property of any component of the filtration unit. For example, a sensor may measure the debris level in a filter or debris receptable. For example, a sensor may be configured to measure a temperature. For example, a sensor may be configured to measure a moisture level. For example, a sensor may be configured to measure a cleanliness of the filtered water stream.

It is noted that other embodiments using all possible combinations of features recited in the above-described embodiments may be envisaged. Thus, the present disclosure also relates to all possible combinations of features mentioned herein. Any embodiment described herein may be combinable with other embodiments also described herein, and the present disclosure relates to all combinations of features.

### Brief description of the drawings

Exemplifying embodiments will now be described in more detail, with reference to the following appended drawings:
Figure 1 schematically illustrates a filtration unit in connection with a set of washing machines in accordance with an embodiment of the present invention;
Figure 2 schematically illustrates a filtration unit in accordance with an embodiment of the present invention;
Figure 3 schematically illustrates a filtration unit in accordance with an embodiment of the present invention;
Figure 4 schematically illustrates a filtration unit in accordance with an embodiment of the present invention;
Figure 5 schematically illustrates a filtration unit in accordance with an embodiment of the present invention;
Figure 6a-6c schematically illustrates different separator modules and debris units of filtration units in accordance with different embodiments of the present invention; and
Figure 7 describes a method for removing microplastic fibers from the discharge water of at least one washing machine in accordance with one embodiment.

### Detailed description

As illustrated in the figures, the sizes of the elements and regions may be exaggerated for illustrative purposes and, thus, are provided to illustrate the general structures of the embodiments. Like reference numerals refer to like elements throughout.

Exemplifying embodiments will now be described more fully hereinafter with reference to the accompanying drawings, in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

The expression "washing machine" may indicate a "simple" washing machine (i.e. a washing machine which can only wash and rinse the laundry) as well as a washing-drying machine (i.e. a washing machine which can also dry the laundry) or any piece of laundry equipment. It may also indicate a washer-extractor or a washer without extractor. The washing machine may have a horizontal, inclined, or vertical axis of rotation.

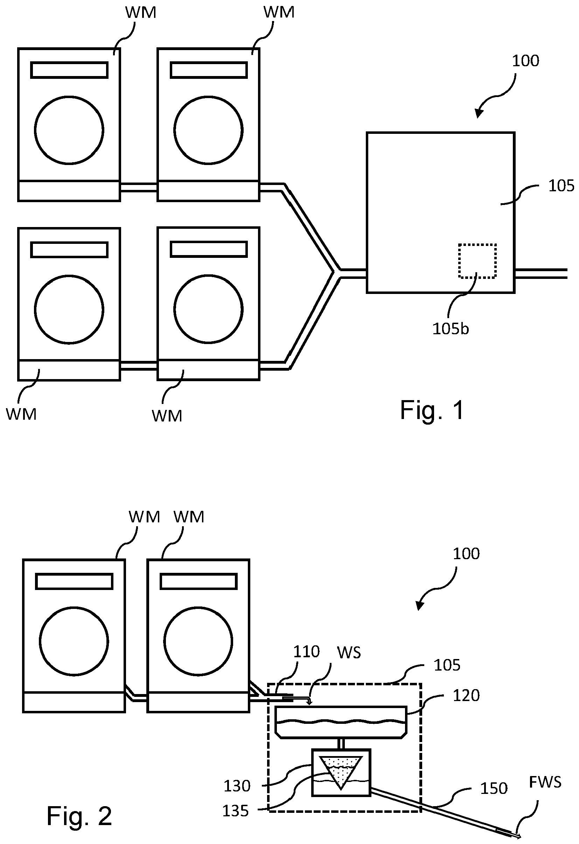

With reference to Figure 1 a filtration unit 100 in accordance with an embodiment is disclosed.

The filtration unit 100 comprises a casing 105 enclosing the filtration unit 100. The filtration unit 100 is connected to a set of washing machines WM and configured to filter the discharge water from the set of washing machines WM The filtration unit 100 is configured to at least partially remove microparticles from the discharge water of the washing machines WM

The filtration unit 100 may be configured to clean effluent water by reducing solids and allowing a user to collect the separated solids. The solids may both be microparticles and other debris. The microparticles may for example be microplastic or microfibers that are released from fabrics during a washing cycle. The other solids may be larger debris such as pieces of fabric, coins, stones or any other debris that might be in the effluent water of the washing machines WM

The filtration unit 100 may be encased in the casing 105 for restricting access for certain users. Certain parts may require regularly performed maintenance and may therefore be more accessible. These parts may for example be accessible through a hatch 105b. The hatch 105b may for example be openable with a key or specific tool. The casing 105 may also have a load bearing frame or hull. Certain parts inside the casing 105 may be sound proofed to ensure that the sound levels follow regulations.

Further details regarding the filtration unit 100 will be provided with reference to the following figures.

With reference to Figure 2 a filtration unit 100 in accordance with an embodiment is disclosed.

The filtration unit 100 is configured to remove or filtrate microparticles from a water stream WS. The water stream WS may be the discharge water from at least one washing machine WM. In Figure 2 the water stream WS comes from a set of two washing machine WM. It is however clear that the filtration unit 100 may be configured to receive the water stream WS from any number of washing machines WM

The filtration unit 100 comprises an inlet 110 configured to deliver the water stream WS from the at least one washing machine WM. The inlet 110 may for example be a pipe that is connected to the outlet of the at least one washing machine WM. The inlet 110 may also be a hose, tube, half-pipe, channel or any type of conduit for transporting a liquid. The filtration unit 100 further comprises a water reservoir 120 configured to receive the water stream WS from the inlet 110.

The filtration unit 100 disclosed in Figure 2 further comprises a separator module 130 fluidly connected to the water reservoir 120. The separator module 130 may be configured to separate microparticles from the water stream WS. This may create a filtered water stream FWS. The filtration 100 comprises an outlet configured to allow the filtered water stream FWS to leave the filtration unit 100.

The filtration unit 100 may further comprise a debris unit 140 (not shown) configured to receive the microparticles from the separator module 130. The microparticles may be passed on to the debris unit 140 from the separator module 130 in a mixture with water. The microparticles may for example be transported to the debris unit 140 in the form of a slurry, a sludge, a slush with any percentage of water.

In the embodiment shown in Fig. 2 the filtration unit 100 does not contain a debris unit 140 and the microparticles are separated and stored within the separator module 130. The microparticles may then be removed from the separator module 130 by a user or by qualified personnel.

The separator module 130 is configured to separate microparticles from the water stream WS. The microparticles may for example be smaller than 5 mm and ranging down to 5 microns or smaller. Depending on where the filtration unit 100 is installed different separation modules 130 may be preferable. The separator module 130 may comprise a microparticle filter 135. The microparticle filter 135 may be configured to catch small particles. The microparticle filter 135 may comprise a self-cleaning mechanism, for example a rotating part configured to scrape the surface of the microplastic filter in order to prevent clogging of the filter. It is clear that the self-cleaning mechanism does not need to have a rotating part. It may in a different embodiment include a part such as a scraper or scraping means configured to scrape the surface by different movement than rotation. The self-cleaning mechanism may also be a water flushing means. The water flushing means may clean the filter by letting water flow over the filter or by spraying the filter with pressurized water. The water flushing means may comprise backwashing. Backwashing may include pumping water backwards through the microparticle filter 135 for removing microparticles from the microparticle filter 135.

In Figure 2 the microparticle filter 135 is a barrier filter in the shape of a cone. However, any other type of microparticle filter 135 configured to remove microparticles may be used. The microparticle filter 135 may for example be a hydrocyclone or centrifuge configured to remove or separate the microparticles from the water stream WS.

In Figure 2 the water reservoir 120 is arranged lower than the drain valves of the washing machine WM allowing gravity to move the water stream WS to the water reservoir 120 via the inlet 110. The water stream WS also moves through the separator module 130 by gravity. In certain embodiments a pump may be used in order to pump the water stream WS from the washing machines WM to the water reservoir 120. Further, a pump may also be used to move the water stream WS from the water reservoir 120 to the separator module 130.

In Figure 2 the water stream WS goes directly from the water reservoir 120 to the separator module 130. There may however be an intermediate reservoir in other embodiments receiving the water stream WS before it enters the separator module 130. The water stream may also be pumped by a pump from the water reservoir 120 to the separator module 130.

The filtration unit 100 may further comprise additional separation means. The additional separation means may be placed within the separator module 130 or upstream the separator module 130. The additional separation means may for example be placed within the water reservoir. The addition separation means may be electrostatic separation, degradation, photodegradation, chlorination, or magnetic separation.

Magnetic separation may include adding magnetic nanoparticles to a washing detergent or textile softener. The magnetic nanoparticles may bond to certain microparticles that can then be removed by the use of a magnetic field. The magnetic field may be added prior to the separation module 130 or within the separation module 130.

Electrostatic separation may include an electric field applied in order to attract microparticles that are electrically charged. Such a separation method may for example be added prior to the separation module 130 to remove microparticles that are electrically charged. The electrostatic separation may also be combined with flocculation. During flocculation microparticles may be clumped together for easier removal.

Degradation may include breaking down the microparticles with certain chemicals in order to ensure that they do not end up in nature. Degradation of microparticles often takes time and it may therefore be combined with other separation method within the separator module 130 to ensure that as many microparticles as possible are either degraded or separated from the water stream WS. Degradation may include photodegradation. Photodegradation may be to shine an ultraviolet light or another degrading frequency in order to degrade the microparticles. The water received in the water reservoir 120 may for example be exposed to ultraviolet light. Another way to remove microparticles may be to expose them to a certain substance, for example ozone. This may be done by shining an ultraviolet light on a photocatalytic surface for creating free radicals. The free radicals may for example be ozone. The freed radicals may then interact with the microparticles.

Chlorination may include disinfecting the water stream with chlorine in order to remove certain microparticles. Ultraviolet light may also be used for disinfection, both by itself and together with a photocatalytic surface to create free radicals.

The water reservoir 120 may be a closed water reservoir 120. In case the water reservoir 120 is filled there may be water damming up back to the washing machines WM. The water reservoir 120 may also be open, and in some embodiments include an overflow drain. The water may be damming up back to the washing machine WM disregarding if the water reservoir 120 is a closed water reservoir 120 or an open water reservoir 120.

In Figure 2 the filtration unit 100 is arranged under the washing machines WM. For example, this embodiment may be advantageous when there is a need for filtering discharge water from washing machines WM placed in an elevated position or when the filtration unit 100 is placed between floors of a building. In this embodiment no pumps are needed and the water stream WS may move through the filtration unit 100 by gravity only.

The washing machines WM disclosed in Figure 2 may be any type of washing machine. They may stand directly on the floor or bases, in rows or arranged in a height direction. The discharge water from the washing machines WM may be led into the water reservoir 120 by at least one inlet 110 but it is equally likely that each washing machine WM provides an individual pipe to the water reservoir 120.

The filtration unit 100 may further comprise a casing 105, cabinet or outer housing encasing all other parts of the filtration unit 100. This may be advantageous since it may restrict access to the filtration unit 100 for anyone except qualified personnel. Access to certain parts of the filtration unit may be restricted for safety reasons and to prevent injuries. A user may still be able to access some parts, for example a user may be able to reach the separator module 130 in order to remove debris in form of solidified microplastics.

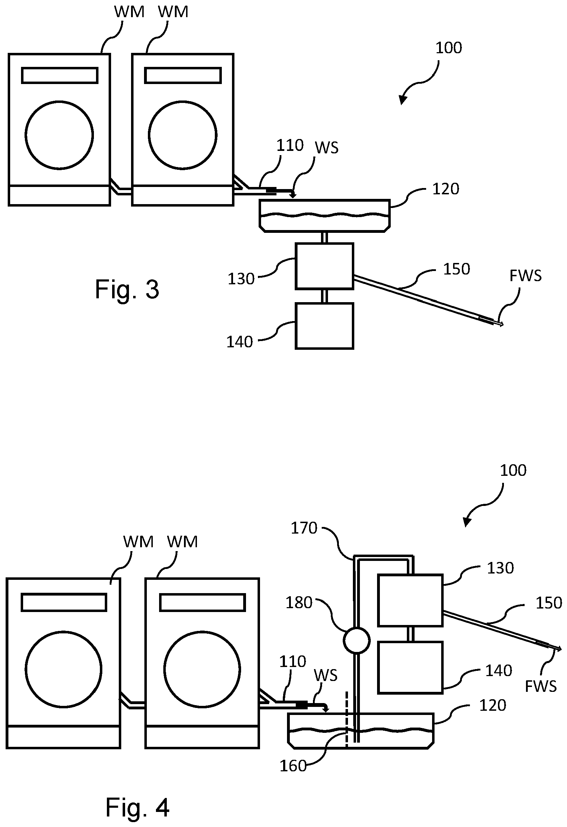

With reference to Figure 3 a filtration unit 100 in accordance with an embodiment is disclosed.

The filtration unit 100 disclosed in Figure 3 is similar to the filtration unit 100 in Figure 2 and may comprise any features discussed in relation to figure 2. The embodiment disclosed in Figure 3 further comprises a debris unit 140 configured to receive the microparticles separated by the separator module 130.

The debris unit 140 may receive the microparticles in a water mixture, for example in the form of a slurry with any percentage of water. The debris unit 140 may be configured to dewater or solidify the microparticle slurry. Advantageously this slurry, or sludge, or mixture may then be solidified or at least partially dried or dewatered in order for the user to be able to discard the microparticles correctly. For example, the debris unit 140 may comprise an evaporator, a pressing means or a disposable filter. The debris unit 140 may also comprise a combination of these in order to remove water from the microparticles. However, embodiments where the microparticles are discarded without being dewatered are possible.

The water stream WS flows through the separator module 130 by gravity. The microparticles and the possible water passed from the separator module 130 to the debris unit 140 may also move by gravity through the debris unit 140. In certain embodiments the water stream WS may instead be pumped through the different parts of the filtration unit 100.

With reference to Figure 4 a filtration unit 100 in accordance with an embodiment is disclosed.

The filtration unit 100 disclosed in Figure 4 is similar to the one disclosed in Figure 3 but is arranged in a height direction.

The filtration unit 100 is configured to remove microparticles from the water stream WS coming from the discharge drains of the washing machines WM The filtration unit 100 comprises an inlet for leading the water stream WS from the at least one washing machine WM to the water reservoir 120. The filtration unit 100 also comprises a separator module 130 fluidly connected to the water reservoir 120. The separator module 130 is configured to separate the microparticles from the water stream WS to create a filtered water stream FWS. The microparticles are led into a debris unit 140 from the separator module 130. The filtration unit 100 further comprises an outlet 150 for leading the filtered water stream FWS out of the filtration unit 100.

The filtration unit 100 disclosed in Figure 4 further comprises a coarse filter 160. The coarse filter 160 is arranged upstream from the separator module 130 for filtering the water stream WS. In Figure 4 the coarse filter 160 is located within the water reservoir 120 so that the water is filtered before ending up in the separator module 130. The coarse filter 160 may be a grille or filter with pores or holes configured to capture objects and larger particles that may entangle, block or damage other parts of the filtration unit 100. The coarse filter 160 may be advantageous in order to avoid blockage within the separator module 130. The coarse filter 160 may be detachable for cleaning or emptying. The coarse filter 160 may also be disposable and interchangeable. The coarse filter 160 may also be self-cleaning by rotation and/or wiping. For example, the coarse filter 160 may be a disposable and replaceable filter bag securely attached over the inlet 110 in order to filter the incoming water stream 150. The coarse filter 160 may also be a removable and reusable mesh bucket placed below the inlet 110. The coarse filter 160 may also be a sloping grid or sieve inside the water reservoir 160.

The filtration unit 100 further comprises a connection means 170 connecting the water reservoir 120 and the separator module 130. The connection means 170 may for example be a pipe, a hose or any other suitable water connection. The connection means 170 disclosed in Figure 4 is vertical, however it may be horizontal or be tilted with an angle. The filtration unit 100 further comprises a pump 180. The pump 180 is configured to move the water stream WS through the connection means 170 from the water reservoir 120 to the separator module 130. The pump 180 may be any suitable pump, for example a centrifugal pump 180 or displacement pump 180. The pump 180 may be configured to pump the water stream WS containing all microparticles not caught by the coarse filter 160.

The pump 180 may be any suitable pump for pumping water. The pump 180 may for example be a fully submersible pump submerged in the water stream. The pump 180 may in other embodiments comprise multiple parts. The pump 180 may for example include a submerged part and a part placed on the connection means 170. The pump 180 may also be fully on the transmission means 170 and not include any part submerged in the water stream. In Figure 4 the pump 180 moves the water stream WS directly to the separator module 130. Other embodiment may include an intermediate water reservoir upstream the separator module 130.

In certain embodiments the connection means 170 and or the pump 180 may comprise an inlet filter in order to filter the water stream WS before pumping the water. The inlet filter may be detachable for cleaning and or emptying. The inlet filter may further be disposable or self-cleaning by rotation or wiping.

The filtered water stream FWS may be directed to a drain or sewer by the outlet 150. In certain embodiments it may be advantageous to reuse the filtered water stream FWS for other purposes.

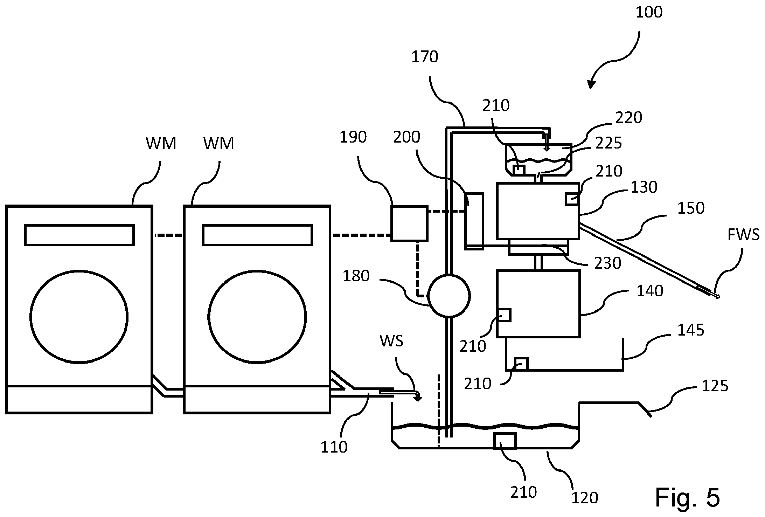

With reference to Figure 5 a filtration unit 100 in accordance with an embodiment is disclosed.

The filtration unit 100 disclosed in Figure 5 may comprise any features described in relation to the previous Figures.

The filtration unit 100 illustrated in Figure 5 further comprises a motor 200. The motor 200 may be configured to drive any component of the filtration unit 100. The motor 200 may be configured to drive the pump 180. The motor 200 may be configured to provide mechanical action to the separator module 130. The motor 200 may be configured to provide mechanical action to the debris unit 140. The mechanical action from the motor 200 may be transferred using a belt, chain, gear system, cogwheels, or any other suitable transfer means.

The separator module 130 may need mechanical work in order to separate the microparticles from the water stream WS. The motor 200 may be connected to the separator module 130 by a belt 230 transferring the required mechanical action to the separator module 130. The belt 230 may for example transfer movement to a self-cleaning filter inside the separator module 130. The belt 230 may also for example transfer movement to a centrifuge inside the separator module 130. The belt 230 may also be a chain, a mechanism transferring movement or mechanical action by gearwheel or cogwheels, or any other suitable transferring means for transferring movement from the motor.

The filtration unit 100 may further comprise at least one sensor 210. The embodiment disclosed in Figure 5 comprises a sensor 210 placed in the water reservoir 120. The sensor 210 in the water reservoir 120 may be configured to measure a water level in the water reservoir 120. The sensor 210 in the water reservoir 120 may for example be a level sensor or level switch and may be connected to a control module 190. The filtration unit of Figure 5 further comprises a sensor 210 in the separator module 130. The sensor 210 in the separator module 130 may be configured to measure a water level and/or a debris level in the separator module 130 and may be connected to the control unit 190. The filtration unit of Figure 5 may further comprise a sensor 210 located either in the debris unit 140 or a debris receptacle 145 of the debris unit 140. The sensor 210 may be configured to measure a level of water or debris and may be connected to the control unit 190.

The filtration unit 100 may comprise a number of sensors 210 throughout the filtration unit 100. The sensors 210 may for example be level switches configured to measure a water or debris level in the first tank 120, the intermediate tank 220, the separator module 130, the debris unit 140 or the debris receptacle 145. In case any of the sensors 210 indicate that a component is full a control unit 190 may stop the filtration unit 100.

The sensor 210 may also be configured to measure a temperature of the microparticles MP. For example, the temperature sensor may be located in the debris unit 140 or in the debris receptacle 145. The temperature of the microparticles MP can be used to determine when the debris is dried and disinfected by heat. The temperature of the microparticles MP may also be measured for safety reasons in order to avoid fires.

A filtration unit 100 according to the invention may include some or all of the sensors described in relation to Figure 5.

The filtration unit 100 disclosed in Figure 5 comprises a control unit 190. The control unit 190 is configured to control at least the operation of one component of the filtration unit 100. The control unit 190 may be configured to control at least one of the separator module 130, and the pump 180, and the debris unit 140 and may be connected to any of the sensors 210. The control unit 190 may, depending on the information from the sensors 210, start or stop the motor 200, the pump 180, the separator module 130 or the debris unit 140.

The control unit 190 may be connected to at least one of the washing machines WM. The control unit 190 may communicate with the washing machines WM digitally. The communication may be unilaterally, i.e. the control unit 190 may only receive information about the wash process of the washing machines WM. The communication may also be bilaterally, i.e. the control unit 190 may receive information about the wash process and may send information about the state of the filtration unit 100. The information may for example be a buffer level, a maintenance state or any other relevant information. The control unit 190 may also be connected to individual control signals in the washing machines WM. For example, the control unit 190 may be connected to the control signal for the drain valve of at least one of the washing machines WM

The control unit 190 may be configured to control any one of the following: The pump speed of the pump 180. The separation speed of the separator module 130, i.e. how fast the separator module 130 removes microparticles from the water stream WS. A separator self-cleaning mechanism. The emptying of the separator module, for example by allowing the separated microparticles to move on to a debris unit. The emptying of the debris unit. The state of the debris unit, for example heat and air flow through the unit to vent evaporated water. Information displayed to a user.

The filtration unit 100 of Figure 5 comprises an intermediate tank 220. The water stream WS may be pumped by pump 180 through connection means 170 to the intermediate tank 220. The water stream WS may then be fed by gravity into the separator module 130. The intermediate tank 220 may comprise a valve 225. The valve 225 may be controlled by the control unit 190. The valve 225 may have two positions, open or closed. The valve 225 may also have more than two positions, being able to let a different amount water through to the separator module 130 for each position. The valve 225 may be opened by the control unit 190 in order to adjust the flow of the water stream WS into the separator module 130. By opening the valve 225 a certain degree the flow, volume of water per time unit, into the separator module 130 can be effectively controlled. The valve 225 may be closed by the control unit 190 when the water level in the separator module 130 is above a certain threshold. The intermediate tank 220 may also comprise a sensor 210 having the functionality of any of the sensors 210 describes above.

The debris unit 140 may be configured to receive the microparticles from the separator module 130. The debris unit 140 may comprise a debris receptacle 145 configured to receive the microparticles after they have passed through the debris unit 140. The microparticles may be dewatered within the debris unit 140 so that the debris receptacle 145 receives dewatered microparticles. The debris receptacle 145 may be configured to collect and store the debris and be easily accessible for emptying. The debris receptacle 145 may for example be a disposable bag or reusable box or drawer.

The filtration unit 100 may further comprise a user interface. The user interface may be placed on the filtration unit 100 or be remotely connected to the filtration unit 100. The user interface may be in connection with the control unit 190 and configured to receive and display information. The user interface may also allow a user to input data into the filtration unit 100. The user interface may be a user interface of one washing machine WM in the set of washing machines WM

The filtration unit 100 may further comprise a casing or outer housing as described in relation to figure 1. The filtration unit 100 may further comprise a hatch that can be opened in order to collect debris. The filtration unit 100 may have several hatches or removable panels for accessing different components of the filtration unit 100 for cleaning, inspection and maintenance.

The filtration unit 100 may also comprise an overflow drain 125 in connection to the water reservoir 120. The overflow drain 125 may lead to the outside of the filtration unit 100 allowing water to escape the filtration unit 100 in case there is a blockage or overflow within the filtration unit 100. The filtration unit 100 may further have overflow drains placed in connection to the intermediate reservoir 220, the separation module 130 or the debris unit 140. Each overflow drain may lead water out of the filtration unit 100 in case of a blockage. Overflow drains may be advantageous since they allow the water to leave the filtration unit in a controlled manner. By allowing water to leave the filtration unit 100 in controlled manner it may be directed into a drain or sewer. In case of a malfunction of the filtration unit 100 maintenance may be required and it may be advantageous if the water has been safely directed out of the unit 100 prior to the maintenance. In a different embodiment, the water may be configured to be dammed up back to the washing machines and not allowed to leave the filtration unit 100 unfiltered.

The control unit 190 may be configured to control the filtration unit 100 using different strategies. The control unit 190 may turn on and off the pump 180 based on the water level in the water reservoir 120 measured by a sensor 210. The pump 180 may for example be turned on when the water level reaches a predetermined threshold and be turned off when it goes below the threshold. The control unit 190 may in some embodiments turn off the pump when a water level in the intermediate reservoir 220 is higher than a threshold value. Turning off the pump 180 based on the water level in the water reservoir may be delayed by an amount of time or may be immediate.

The control unit 190 may further be configured to turn on or off the pump 180 based on a specific state of any of the washing machines WM connected. For example, the control unit 190 may turn on the pump 180 when a drain valve of one or more of the washing machine WM has opened. The control unit 190 may be configured to turn on the pump 180 on a signal from the separator module 130. A sensor 210 in the separator module may send a status of the water level or debris level to the control unit 190 which may then turn on or of the pump 180 depending on the values. The control unit 190 may be configured to turn off the pump 180 based on a time delay from the latest closing of a drain valve of any of the washing machine WM. The control unit 190 may be configured to turn on and off the motor 200 based on information from the sensor 210 in the separator module 130. The motor 200 may be turned on separately, or together with the pump 180. The motor 200 may be turned off with one or multiple delay conditions relating to the closing of the drain valve of any of the connected washing machine WM, the turning off the pump 180 or the water level in the intermediate reservoir 220.

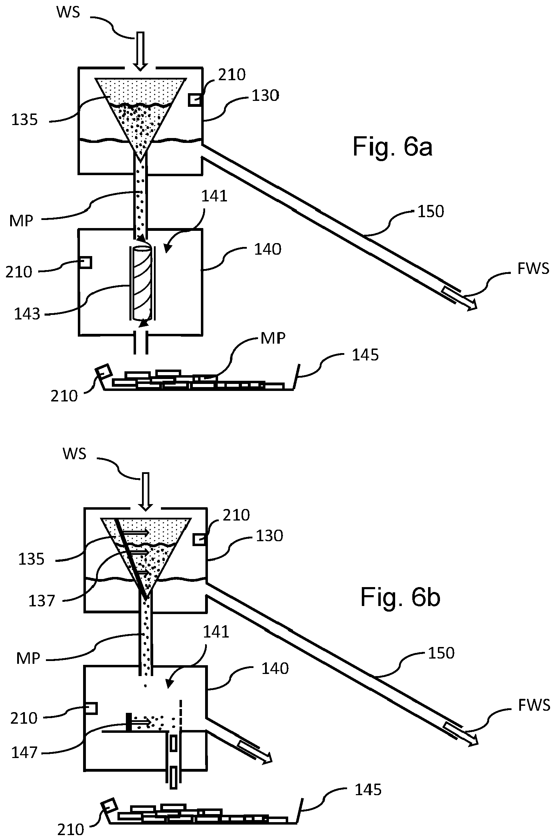

With reference to Figure 6a-6c different separator modules 130 and debris units 140 are disclosed.

The separator modules 130 described in Figures 6a-6c may be used together with any debris unit 140 described in Figures 6a-6c. Different combinations of the separator module 130 and the debris unit 140 may be used in an embodiment of the filtration unit according to the invention.

Figure 6a discloses a separator module 130 configured to separate microparticles MP from a water stream WS. The separator module 130 comprises a microparticle filter 135. The microparticle filter 135 is configured to filter out the microparticles MP from the water stream WS. From the separator module 130 an outlet 150 leads the filtered water stream FWS out of the filtration unit. The outlet 150 may be a pipe, hose, half-pipe, or any other suitable water transportation means.

In Figure 6a the microparticle filter 135 is a barrier filter shaped as a cone. The microparticle filter 135 may allow the microparticles MP to leave the separator module 130 and travel to the debris unit 140.

The debris unit 140 in Figure 6a comprises a dewatering means 141 configured to remove excess water from the microparticles MP. The dewatering means 141 in this embodiment is an evaporator 143. The evaporator 143 may be configured to heat the microparticles MP and the excess water in order to evaporate the water. The microparticles MP may then be moved to a debris receptacle 145 in order to be discarded by a user.

The evaporator 143 may be any kind of evaporator 143. The evaporator 143 may for example be a heat pump, a microwave, a mist generator, an immersion heater, or an induction heater. The evaporator 143 may be configured to remove excess water from the microparticles MP. The debris unit 140 may further comprise a vapor guide for guiding water vapor created by the evaporator 143 out of the filtration unit. The vapor guide may be any suitable vapor guiding means, such as piping or holes in the debris unit 140 allowing the vapor to escape the filtration unit. The vapor may also be condensed, and the resulting condensed water may be drained out of the filtration unit 100. The condensed water may also be returned to the water reservoir 120. The filtration unit 100 may therefore also comprise a condenser. The cooling capacity of the condenser may be a heat pump system, or a cooling system, or an ambient source. The condensation of the vapor may take place within the filtration unit 100. The condensation of the vapor may also take place outside the filtration unit 100.

Figure 6b discloses a separator module configured to separate microparticles MP from a water stream WS. The separator module 130 comprises a microparticle filter 135. The microparticle filter 135 is configured to filter out the microparticles MP from the water stream WS. The microparticle filter 135 further comprises a rotating part 137 configured to clean the microparticle filter 135 in order to prevent clogging.

In Figure 6b the microparticle filter 135 is a barrier filter shaped as a cone with a rotating part 137 configured to clean the filter 135. The rotating part 137 may be driven by a motor as described in relation to Figure 5. The microparticle filter 135 may allow the microparticles MP to leave the separator module 130 and travel to the debris unit 140.

The debris unit 140 in Figure 6b comprises a dewatering means 141 configured to remove excess water from the microparticles MP. The dewatering means 141 in this embodiment comprises a pressing means 147. The pressing means 147 may be configured to press the excess water out of the microparticles arriving at the debris unit 140. The excess water may be directed out of the debris unit 140 and the dewatered microparticles MP may be stored or passed on to a debris receptacle 145. The pressing means 147 may be powered by a motor.

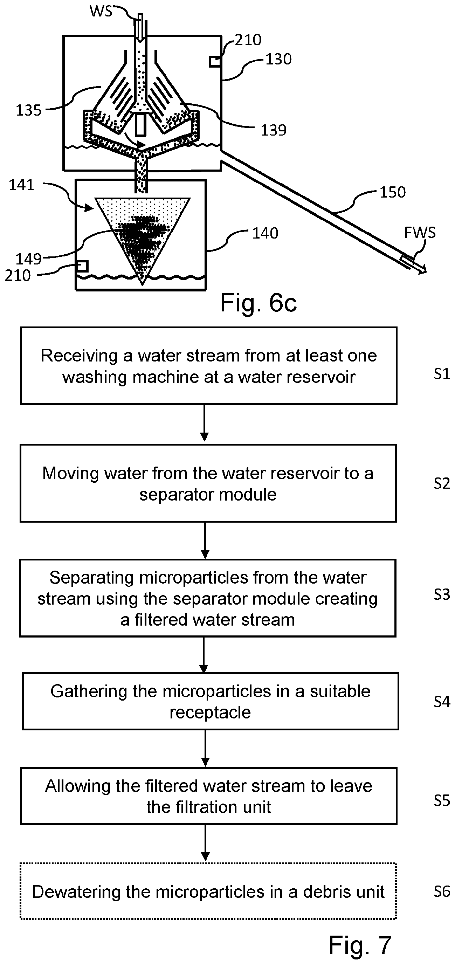

Figure 6c discloses a separator module configured to separate microparticles MP from a water stream WS. The separator module 130 comprises a microparticle filter 135. The microparticle filter 135 is configured to filter out the microparticles MP from the water stream WS. The microparticle filter 135 disclosed in Figure 6c is a centrifuge 139. The centrifuge 139 may be powered by a motor and configured to rotate in order to separate microparticles MP from the water stream WS.

The centrifuge 139 may allow the microparticles MP to leave the separator module 130 and travel to the debris unit 140.

The debris unit 140 in Figure 6c comprises a dewatering means 141 configured to remove excess water from the microparticles MP. The dewatering means 141 in this embodiment comprises a disposable filter 149. The disposable filter 149 may be easy to discard and interchange for a user in order to ensure the proper function of the filtration unit. The disposable filter 149 may also be a cleanable or reusable filter and have any suitable shape. The embodiment of the debris unit 140 disclosed in Figure 6c does not have a debris receptacle. Instead, the debris is collected directly from the debris unit 140 by the user. The debris may be collected by changing or emptying the disposable filter 149.

The filtration unit according to the invention may comprise a control unit configured to control the operation of the separator module 130. The control unit may control the operation of the centrifuge 139. The control unit may turn on the centrifuge 139 if the debris unit 140 is not full.

The control unit may turn on a pump providing the separator module 130 with a water stream WS if a water level is high in a water reservoir. If the separator module 130 is preceded by an intermediate tank, the pump may be turned on if the water level is low in the intermediate tank. The pump may be turned on if the centrifuge is active. The centrifuge 139 may have different rotation speed. For example, the centrifuge may separate microparticles from the water stream WS at a separating speed. The centrifuge 139 may also have a holding speed, that is a rotation speed where the water content is only held within the centrifuge 139 by rotation. The centrifuge 139 may be emptied in different ways. In one embodiment the centrifuge 139 may be emptied when the rotation stops. When the rotation stops the microparticles MP may drop down to the debris unit 140. The centrifuge 139 may also be emptied by having a controllable valve placed below the centrifuge 139 where the microparticles MP may leave the centrifuge 139. The separating speed and the holding speed may depend on the size of the centrifuge 139. For example, the separating speed may be 1000 rpm, or may be 2500 rpm. The separating speed may also depend on the amount of water placed within the centrifuge 139 while separating microparticles MP. The holding speed may be between 200-1000 rpm. It is however clear that any suitable holding and separating speed is possible.

The control unit may turn off the pump in order to stop the water stream WS from reaching the separator module 130. The pump may be turned off if the water level is low in a water reservoir, or if the water level is high in an intermediate tank, or if the centrifuge is turned off, or if the separator speed is lower than a predetermined separator speed.

The separator module 130 may be configured to be activated due to different factors. The centrifuge 139 may be turned on when the separator module 130 is activated. The centrifuge 139 may be turned on when the water reservoir has a water level exceeding a threshold. The centrifuge 139 may be turned on when there is not too much debris build-up inside the separator module 130. The centrifuge 139 may be turned off if there is too much debris build-up in the separator module 130. The separation speed may vary depending on a separation degree. The separation degree may be predetermined, manually set, or determined by a sensor. The separator module 130 may be emptied if the debris unit 140 is not full, based on a timing factor or debris level sensor.

The centrifuge 139 may also be a hydrocyclone. The separator module 130 may also comprise a plurality of hydrocyclones. In order to be able to separate microparticles MP from the water stream WS there may be a need for multiple hydrocyclones. A hydrocyclone uses fluid pressure to generate centrifugal force and a flow pattern which can separate particles from a liquid medium. A hydrocyclone can also separate a heavier liquid from a lighter liquid. The hydrocyclones may have a diameter of a few millimeters. For example, the hydrocyclones may have a diameter of 7, or 6 millimeters.

The centrifuge 139 may comprise a water flushing means configured to spray an inside of the centrifuge with water. While separating microparticles MP from the water stream WS microparticles MP may get stuck on an inside wall of the centrifuge 139. By letting water flow over the inside of the centrifuge 139 these microparticles MP may be removed. Water may also be pressurized and sprayed on the inside wall of the centrifuge 139 in order to remove the microparticles MP. The water may for example be reused water from the filtered water stream FWS or from any other suitable water source.

The water flushing means may also be a backwashing means. Backwashing may include pumping water backwards to remove the microparticles stuck on the walls of the centrifuge 139. Backwashing may also be used in order to clean a microparticle filter 135 in the separator module 130.

The separator module 130 in Figures 6a-6c may comprise any other suitable separation means and may be completely passive (for example a filter) or require mechanical work (for example centrifuge). In case the separator module 130 requires mechanical work, this may be provided by a motor. The motor may be controlled by a control unit. The control unit may further be connected to sensors 210 that measure certain levels of water and/or debris or temperatures within the separator module 130 and debris unit 140.

Further, within any of the components described in relation to Figures 6a-6c, or in relation to any one of the previous figures, water may evaporate and create steam or vapor within any part of the filtration unit 100. For example, water may be evaporated in the separator module 130 or within the debris unit 140. As an example, water may be evaporated within the debris unit 140 when the debris unit 140 comprises an evaporator 143. In any of the embodiments of the invention it may be advantageous to include a means for handling the water vapor created. The filtration unit may for example comprise a vapor guide configured to guide vapor created in the filtration unit out of the filtration unit. The vapor guide may be configured to guide vapor created in the debris module out of the filtration unit. The vapor guide may for example be a pipe system configured to allow the vapor to leave the filtration unit.

In another embodiment, vapor created in the filtration unit 100 may be condensed and stored within the filtration unit for later removal. The condensed water vapor may also be led out of the filtration unit 100 together with the filtered water stream FWS. The condensed water may also be returned to the water reservoir 120. The filtration unit 100 may therefore also comprise a condenser. The cooling capacity of the condenser may be a heat pump system, or a cooling system, or an ambient source. The condensation of the vapor may take place within the filtration unit 100. The condensation of the vapor may also take place outside the filtration unit 100.

With reference to Figure 7 a method for removing microparticles from a water stream is provided.

The method described in Figure 7 may for example be implemented in a control unit of a filtration unit according to an embodiment of the invention.

The method comprises a first step S1 of receiving a water stream from at least one washing machine at a water reservoir. The water stream may comprise a certain percentage of microparticles to be filtered, removed or separated before the water is directed into a drain. The method further comprises a second step S2 of moving water from the water reservoir to a separator module. This step may be done in different ways, for example by allowing the water to flow by gravity to the separator module. In certain embodiments the water may need to be pumped from the water reservoir to the separator module. The method further comprises a third step S3 of separating microparticles from the water stream using the separator module creating a filtered water stream. The filtration method may vary depending on the separator module, but may for example include a barrier filter, a hydrocyclone or a centrifuge. The method further comprises a fourth step S4 of gathering the microparticles in a suitable receptacle. The microparticles may for example be stored within the separator module until removed by a user or passed on to a debris unit as described herein. The method further comprises a fifth step S5 of allowing the filtered water stream to leave the filtration unit.

The suitable receptacle may be a debris unit. The debris unit may be configured to receive the microparticles from the separator module. The method may further comprise a sixth step S6 of dewatering the microparticles in the debris unit. The separator module may separate the microparticles from a water stream and pass them on to a debris unit. The microparticles may be passed on in a water mixture. The debris unit may comprise a dewatering means, such as an evaporator, a pressing means or a filter, for dewatering the microparticles.

All steps and any additional steps may be implemented in a control unit. The control unit may control the operation of the filtration unit using valves, pumps and motors in order to control the flow of the water. The control unit may be connected to one or more sensors in order to receive information of the water and debris levels in the filtration unit in order to allow a water flow or in order to stop a water flow.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A filtration unit (100) configured to remove microparticles from a water stream from at least one washing machine (WM), the filtration unit comprises:
an inlet (110) configured to deliver a water stream (WS) from at least one washing machine (WM);
a water reservoir (120) configured to receive the water stream (WS) from the inlet (110);
a separator module (130) fluidly connected to the water reservoir (120), wherein the separator module (130) is configured to separate microparticles (MP) from the water stream (WS) creating a filtered water stream (FWS); and
an outlet (150) configured to allow the filtered water stream (FWS) to leave the filtration unit (100).

2. The filtration unit (100) according to claim 1, wherein the at least one washing machine (WM) is a set of two or more washing machines.

3. The filtration unit (100) according to claim 1 or 2, further comprising a coarse filter (160) arranged upstream from the separator module (130) for filtering the water stream (WS).

4. The filtration unit (100) according to any one of the preceding claims, further comprising;
a connection means (170) fluidly connecting the water reservoir (120) and the separator module (130); and
a pump (180) configured to move the water stream (WS) through the connection means (170) from the water reservoir (120) to the separator module (130).

5. The filtration unit (100) according to any one of the preceding claims, further comprising a debris unit (140) configured to receive the microparticles from the separator module (130).

6. The filtration unit (100) according to claim 5, wherein the debris unit (140) comprises a dewatering means (141) for removing excess water from the microparticles (MP).

7. The filtration unit (100) according to claim 6 wherein the dewatering means (141) comprises at least one of; an evaporator (143), a pressing means (147), and a disposable filter (149).

8. The filtration unit (100) according to claim 6 or 7, wherein the debris unit (140) further comprises a debris receptacle (145) configured to receive the dewatered microparticles.

9. The filtration unit (100) according to any one of the preceding claims, further comprising a motor (200) configured to drive at least one component of the filtration unit (100).

10. The filtration unit (100) according to any one of the preceding claims, wherein the separator module (130) comprises a microparticle filter (135) arranged for filtrating microparticles from the water stream (WS).

11. The filtration unit (100) according to claim 10, wherein the microparticle filter (135) comprises a rotating part (137) configured to clean the microparticle filter (135) in order to prevent clogging.

12. The filtration unit (100) according to claim 7, wherein the microparticle filter (135) comprises a centrifuge (139) configured to remove microparticles from the water stream (WS).

13. The filtration unit (100) according to any one of the preceding claims, wherein the water stream (WS) flows through the separator module (130) by gravity.

14. The filtration unit (100) according to any one of the preceding claims, further comprising a control unit (190) configured to control at least the operation of one component of the filtration unit (100).

15. The filtration unit (100) according to claim 14, wherein the control unit (190) is connected to the at least one washing machine (WS) as well as the filtration unit (100).

16. The filtration unit (100) according to any one of the preceding claims, further comprising an overflow drain (125) in connection with the water reservoir, wherein the overflow drain allows the water stream (WS) to leave the filtration unit (100) in order to prevent an uncontrollable overflow or blockage.

17. The filtration unit (100) according to any one of the preceding claims, further comprising a sensor (210) configured to measure a water level in at least one of the water reservoir (120) and the separator module (130).

18. A method for removing microparticles from a water stream using a filtration unit according to claim 1-17, the method comprises:
receiving (S1) a water stream from at least one washing machine at a water reservoir,
moving (S2) water from the water reservoir to a separator module,
separating (S3) microparticles from the water stream using the separator module creating a filtered water stream,
gathering (S4) the microparticles in a suitable receptacle, and
allowing (S5) the filtered water stream to leave the filtration unit.
